# EUROPEAN PATENT APPLICATION

(11) **EP 4 151 326 A1**
(43) Date of publication of application: **22.03.2023**
(21) Application number: 21804597.9
(22) Date of filing: 01.04.2021
(51) Int. Cl.: B21B 45/02, B21B 37/76

(54) **METHOD FOR PREDICTING TEMPERATURE DEVIATION IN THICK STEEL PLATE, METHOD FOR CONTROLLING TEMPERATURE DEVIATION IN THICK STEEL PLATE, METHOD FOR GENERATING TEMPERATURE DEVIATION PREDICTION MODEL FOR THICK STEEL PLATE, METHOD FOR PRODUCING THICK STEEL PLATE, AND EQUIPMENT FOR PRODUCING THICK STEEL PLATE**

(30) Priority: 15.05.2020 JP 2020086208
(71) Applicant: JFE Steel Corporation, Tokyo 100-0011 (JP)
(72) Inventor: NOJIMA, Yusuke, Tokyo 100-0011 (JP); UEOKA, Satoshi, Tokyo 100-0011 (JP); TAMURA, Yuuta, Tokyo 100-0011 (JP); KIMURA, Yukio, Tokyo 100-0011 (JP); HIRANO, Takahiro, Tokyo 100-0011 (JP); MIURA, Ken, Tokyo 100-0011 (JP); KUMANO, Ori, Tokyo 100-0011 (JP)
(74) Representative: Hoffmann Eitle
(86) International application number: PCT/JP2021/014115
(87) International publication number: WO 2021/229949

(57) **Abstract**

A method of predicting temperature deviation of a thick steel plate according to the present invention is a method of predicting temperature deviation of a thick steel plate in a heat treatment facility for a thick steel plate having a water-cooling device that jets cooling water onto a heated thick steel plate to cool the thick steel plate and a draining device that removes the cooling water on the thick steel plate at the downstream side of the water-cooling device, and includes a step of predicting temperature deviation information on the thick steel plate after passing through the draining device using a temperature deviation prediction model generated by machine learning with at least one operating parameter selected from each of operating parameters of the water-cooling device and operating parameters of the draining device as input data and with temperature deviation information on the thick steel plate after passing through the draining device as output data.

## Description

### Field

The present invention relates to a technique for a manufacturing facility and a manufacturing method in which heat treatment of a thick steel plate is performed, and in particular, to a technique for predicting the temperature distribution in the in-plane direction of the thick steel plate after passing through a cooling facility and making the temperature distribution uniform. Background

The mechanical properties needed for thick steel plates, especially strength and toughness, have become particularly strict in recent years. In the manufacturing of thick steel plates, needed properties are secured by, in addition to direct quenching of a high-temperature steel plate after rolling, quenching in a heat treatment facility, or stopping cooling at the moment the steel plate reached a predetermined temperature during the direct quenching or during the quenching in the heat treatment facility. At that time, it is essential to make the cooling rate and the cooling stop temperature uniform over the entire width and length of the steel plate so that uniform properties can be ensured over the entire width and length.

Quenching herein refers to a heat treatment method in which a steel plate above the Ac3 transformation point, which is the completion temperature of austenite transformation completed after hot rolling, or a steel plate that is cooled after rolling and then heated again to above the Ac3 transformation point in a heating furnace or the like are rapidly cooled to below the martensite transformation starting temperature (Ms point) in a cooling facility. Quenching is widely used as a manufacturing method, particularly, for a high-strength thick steel plate. Furthermore, quenching the steel plate after rolling without cooling and reheating is particularly referred to as direct quenching. There may be a case of, using a heat treatment facility including a heating furnace and a cooling facility that is located at a separate location from the rolling line, performing quenching on a thick steel plate that has been once cooled after hot rolling.

When stopping the cooling of a steel plate at a predetermined temperature, a method of cooling a steel plate while restraining the steel plate with a plurality of pairs of upper and lower restraining rolls (draining rolls) as in the technique described in Patent Literature 1 has been known. Specifically, this method controls the cooling time so that, by separating the region where cooling water is jetted by the restraining rolls and by setting the appropriate transport speed of the steel plate according to the plate thickness, needed cooling stop temperature, and the like, cooling stops at the moment the steel plate reaches a predetermined temperature.

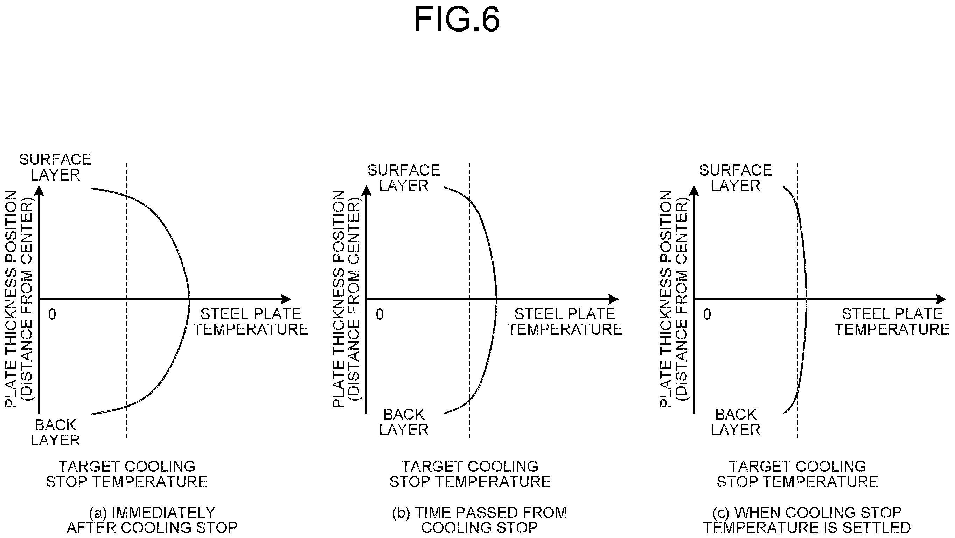

FIG. 6 illustrates an example of the time change of the temperature distribution in the plate thickness direction of a thick steel plate after cooling is stopped. As illustrated in FIG. 6(a), immediately after the cooling is stopped, the temperature of the surface layer of the steel plate is low and there is a large temperature deviation between the surface layer and the center position. Thereafter, as illustrated in FIG. 6(b) and FIG. 6(c), the temperature of the surface layer rises due to recuperative heat from the center position as time passes, so that the temperature deviation between the surface layer and the center position becomes smaller, and the entire steel plate reaches a predetermined target cooling stop temperature.

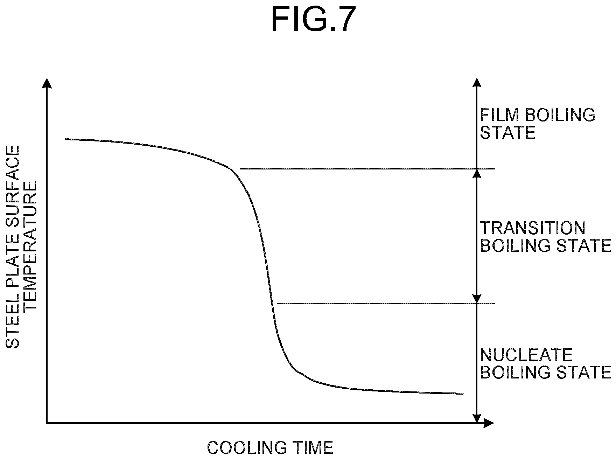

FIG. 7 illustrates an example of the history of steel-plate surface temperature in a high-temperature steel plate water cooling process. As illustrated in FIG. 7, in the initial stage of water-cooling, the steel plate is cooled in a film boiling state in which there is a steam film between the steel plate and water. Because the water and the steel plate do not make direct contact in the film boiling state, the heat transfer coefficient, which is an index of cooling capacity, is low and the surface temperature decreases gradually. However, when the surface temperature reaches around 700 to 500°C, it becomes difficult to maintain the steam film between the water and the steel plate, and the steel plate is cooled in a transition boiling state in which the water and the steel plate are in partial contact. Once contact between the water and the steel plate occurs, the flow of water in the vicinity of the steel plate is intensified due to the evaporation of the water in contact with the steel plate, the heat transfer coefficient rises abruptly, and the surface temperature drops sharply. Thereafter, while maintaining a high heat transfer coefficient, it is shifted to a nucleate boiling state in which the contact between the steel plate and water steadily occurs, and the surface temperature drops sharply to near the water temperature.

In manufacturing thick steel plates having predetermined mechanical properties, a heat treatment process in which cooling stop is strictly performed at a predetermined temperature is demanded. Putting the above-described two facts together, the surface layer of the thick steel plate immediately after water-cooling is low in temperature, and thus tends to be in a transition boiling state or a nucleate boiling state in which the contact between the steel plate and water occurs. At that time, if water partially adheres to the thick steel plate immediately after water-cooling, only that portion is cooled with a high heat transfer coefficient and the cooling stop temperature is lower than that of the portion where no water adhered, and thus the steel plate having uniform properties over the entire surface will not be obtained. Therefore, a draining device for reliably preventing water from riding on the thick steel plate after the thick steel plate has passed through the water-cooling device is important.

As a countermeasure against water adhering to the steel plate after cooling stop, Patent Literature 2 discloses a technology that prevents, by appropriately controlling the pressing load of the draining rolls to narrow the gap formed at the contact portion between the upper roll of the draining rolls and the steel plate, cooling water from leaking outside the draining rolls. Meanwhile, Patent Literature 3 discloses a technology that, by separating the region where cooling water is jetted from the region downstream thereof by draining rolls, and by arranging a draining spray nozzle downstream of the draining rolls, jets high-pressure water from an oblique direction so that cooling water leaking from the gap formed at the contact portion between the upper roll of the draining rolls and the steel plate is discharged from one side edge of the steel plate in the width direction. Furthermore, Patent Literature 4 discloses a technology that, by arranging a draining nozzle for jetting water on the downstream side of the draining rolls, changes the momentum of the draining water jetted from the draining nozzle according to the momentum of the cooling water leaking from the gap formed in the contact portion between the upper roll of the draining rolls and the steel plate.

### Citation List

### Patent Literature

Patent Literature 1: Japanese Patent No. 3287245
Patent Literature 2: Japanese Patent No. 6521193
Patent Literature 3: Japanese Patent Application Laid-open No. 2002-316205
Patent Literature 4: Japanese Patent Application Laid-open No. 2012-51013

### Summary

### Technical Problem

However, in the draining rolls described in Patent Literature 1, the gap formed at the contact portion between the upper roll of the draining rolls and the steel plate is partially increased, making it difficult to prevent cooling water on the steel plate from leaking toward the downstream side. Meanwhile, as described in Patent Literature 2, if the pressing load of the draining rolls is increased to some extent, the draining rolls restrain the steel plate from being deformed due to cooling distortion, so that leaking water from the gap formed at the contact portion between the draining rolls and the steel plate can be suppressed to some extent. However, with high-strength steel plates, the cooling distortion due to water-cooling may increase, and temperature nonuniformity due to water riding may occur. In addition, when the cooling distortion is large, a large pressing force is needed, and the deflection of the draining rolls is increased, so that effective draining cannot be performed. Moreover, if the roll diameter is increased to reduce the deflection of the draining rolls (to increase rigidity), the restrictions in the placement of the water-cooling nozzles of the adjacent water-cooling device arise, and the facility cost increases due to an increase in the size of the facility.

Furthermore, Patent Literature 3 describes that the cooling water leaking from the gap formed in the contact portion between the draining rolls and the steel plate is removed by using a draining spray. However, the amount of leaking water varies depending on the operating conditions such as the plate thickness and plate width of the steel plate, in addition to the flatness and strength of the steel plate. Therefore, if a draining spray condition is set uniformly without considering these conditions, the pressure and flow rate to jet the draining spray become excessive overall, and excess energy is needed to jet the draining spray, resulting in an increase in manufacturing costs. Moreover, when the method in Patent Literature 4 is applied, because the cooling distortion of the steel plate varies depending on heat treatment conditions such as the size and strength of the steel plate and the cooling rate, a sufficient effect is not obtained depending on the target material. In any of the above-described conventional technologies, there is no effective method other than visually checking the presence of water riding leaking onto the surface of the thick steel plate after it has passed through the water-cooling device. However, it is not easy to check the presence of water riding immediately after the thick steel plate passes through the water-cooling device due to steam generated during water-cooling in the vicinity of the water-cooling device.

The present invention has been made in view of the above-described problems, and an object of the present invention is to provide a method of predicting temperature deviation in a thick steel plate capable of accurately predicting temperature deviation information on the thick steel plate after passing through a draining device. Another object of the present invention is to provide a method of controlling temperature deviation in a thick steel plate capable of accurately controlling the temperature deviation of the thick steel plate after passing through a draining device within an allowable range. Another object of the present invention is to provide a method of generating a temperature deviation prediction model for a thick steel plate capable of accurately predicting temperature deviation information on the thick steel plate after passing through a draining device. Another object of the present invention is to provide a method of manufacturing a thick steel plate and a manufacturing facility of a thick steel plate capable of manufacturing the thick steel plate having desired properties with high yield.

### Solution to Problem

A method of predicting temperature deviation in a thick steel plate according to the present invention in a heat treatment facility for the thick steel plate, the heat treatment facility including a water-cooling device configured to jet cooling water onto the heated thick steel plate to cool the thick steel plate, and a draining device configured to remove the cooling water on the thick steel plate at a downstream side of the water-cooling device, includes a step of predicting temperature deviation information on the thick steel plate after passing through the draining device using a temperature deviation prediction model generated by machine learning with at least one operating parameter selected from each of operating parameters of the water-cooling device and operating parameters of the draining device as input data and with temperature deviation information on the thick steel plate after passing through the draining device as output data.

The operating parameters of the water-cooling device may include at least one out of cooling stop temperature of the thick steel plate, an amount of cooling water, and a transport speed of the thick steel plate in the cooling device.

The draining device may include draining rolls configured to restrain the thick steel plate by a pair of upper and lower rolls, and a draining purge nozzle configured to jet fluid toward a contact portion between the draining rolls and the thick steel plate, and the operating parameters of the draining device may include at least one out of a pressing roll position or pressing force of the draining rolls and a jetting pressure or jetting amount of the draining purge nozzle.

A method of controlling temperature deviation in a thick steel plate according to the present invention includes the steps of: predicting the temperature deviation of a thick steel plate after passing through the draining device using the method of predicting temperature deviation in a thick steel plate according to the present invention, and resetting at least one operating parameter selected from the operating parameters of the draining device so that a predicted temperature deviation is within a preset allowable range.

The operating parameters of the draining device to be reset may include at least one out of a pressing roll position or pressing force of draining rolls that restrain a thick steel plate by a pair of upper and lower rolls, and a jetting pressure or jetting amount of a draining purge nozzle that jets fluid toward the contact portion between the draining rolls and the thick steel plate.

A method of generating a temperature deviation prediction model according to the present invention for a thick steel plate in a heat treatment facility for a thick steel plate, the heat treatment facility including a water-cooling device configured to jet cooling water onto the heated thick steel plate to cool the thick steel plate, and a draining device configured to remove the cooling water on the thick steel plate at a downstream side of the water-cooling device, includes a step of generating a temperature deviation prediction model for the thick steel plate after passing through the draining device by machine learning using a plurality of pieces of learning data with information including at least one piece of operation result data selected from each of operation result data of the water-cooling device and operation result data of the draining device as input result data and with temperature deviation information on the thick steel plate corresponding to the input result data after passing through the draining device as output result data.

The machine learning may include machine learning selected from neural networks, decision tree learning, random forests, and support vector regression.

A method of manufacturing a thick steel plate according to the present invention includes a step of manufacturing the thick steel plate using the method of controlling temperature deviation in a thick steel plate according to the present invention.

A manufacturing facility of a thick steel plate according to the present invention includes: a water-cooling device configured to jet cooling water onto a heated thick steel plate to cool the thick steel plate; a draining device configured to remove the cooling water on the thick steel plate at a downstream side of the water-cooling device; and a temperature deviation prediction unit configured to output temperature deviation information on the thick steel plate after passing through the draining device, wherein the temperature deviation prediction unit is a machine learning model with at least one operating parameter selected from each of operating parameters of the water-cooling device and operating parameters of the draining device as input data and with temperature deviation information on the thick steel plate after passing through the draining device as output data. Advantageous Effects of Invention

According to the present invention, a method of predicting temperature deviation in a thick steel plate capable of accurately predicting temperature deviation information on the thick steel plate after passing through a draining device can be provided. Furthermore, according to the present invention, a method of controlling temperature deviation in a thick steel plate capable of accurately controlling the temperature deviation of the thick steel plate after passing through a draining device within an allowable range can be provided. According to the present invention, a method of generating a temperature deviation prediction model for a thick steel plate capable of accurately predicting temperature deviation information on the thick steel plate after passing through a draining device can be provided. According to the present invention, a method of manufacturing a thick steel plate and a manufacturing facility of a thick steel plate capable of manufacturing the thick steel plate having desired properties with high yield can be provided.

### Brief Description of Drawings

FIG. 1 is a diagram illustrating a schematic configuration of a heat treatment facility for a thick steel plate according to one embodiment of the present invention.
FIG. 2 is a diagram illustrating the configuration of a cooling facility illustrated in FIG. 1.
FIG. 3 is a block diagram illustrating the configuration of a control device illustrated in FIG. 1.
FIG. 4 is a flowchart illustrating the flow of a temperature deviation control process that is one embodiment of the present invention.
FIG. 5 is a diagram for which acceptance/rejection of the temperature deviation when the cooling stop temperature is 140°C and 500°C is organized by the amount of cooling water and the amount of purge jetting on the exit side of a cooling zone.
FIG. 6 is a diagram illustrating an example of the time change of the temperature distribution in the plate thickness direction of a thick steel plate after cooling is stopped.
FIG. 7 is a diagram illustrating an example of the history of steel-plate surface temperature in a high-temperature steel plate water cooling process.

### Description of Embodiments

With reference to the accompanying drawings, an embodiment of the present invention will be described hereinafter. The following embodiment exemplifies devices and methods to embody the technical concept of the present invention, and the technical concept of the present invention is not limited to the following embodiment in terms of the quality, shape, structure, arrangement, and the like of the constituent components.

### [Heat Treatment Facility]

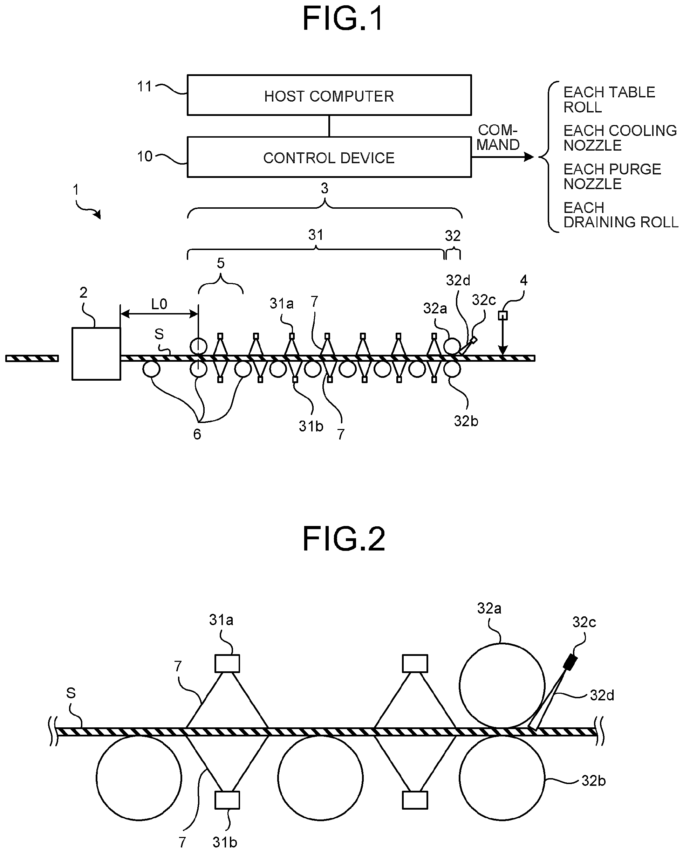

First, with reference to FIG. 1 through FIG. 3, the configuration of a heat treatment facility for a thick steel plate that is one embodiment of the present invention will be described.

FIG. 1 is a diagram illustrating a schematic configuration of a heat treatment facility for a thick steel plate that is one embodiment of the present invention. As illustrated in FIG. 1, a heat treatment facility 1 for a thick steel plate, which is one embodiment of the present invention, is an offline facility and includes, as the main constituent elements, a heating furnace 2 that heats a thick steel plate S at 100°C or less to a predetermined temperature, a cooling facility 3 that cools the thick steel plate S heated in the heating furnace 2, an exit-side thermometer 4 that measures the temperature of the thick steel plate S at the exit side of the cooling facility 3, and a control device 10 that controls the operation of the cooling facility 3.

### [Heating Furnace]

In the heating furnace 2, the thick steel plate S that has been hot rolled to a predetermined thickness (for example, 30 mm) and width (for example, 2000 mm) on a hot rolling line located separate from the heat treatment facility 1 and cooled to about room temperature is inserted. The thick steel plate S is heated to a predetermined temperature (for example, 910°C) in the heating furnace 2. The thick steel plate S extracted from the heating furnace 2 is cooled in the cooling facility 3 while being transported by a plurality of table rolls 6 installed on the exit side of the heating furnace 2.

In general, in an offline heat treatment facility, a steel plate is extracted from the heating furnace 2 and transported at a substantially constant speed until cooling is completed by the cooling facility 3, so that the difference in cooling start temperature at the leading and trailing ends of the steel plate is small. That is, assuming that the heating temperature of the steel plate is T0, the distance from the heating furnace 2 to the cooling facility 3 is L0, and the transport speed of the steel plate is V0, the leading end portion of the steel plate is extracted at the temperature T0 and cooled through a radiational cooling time L0/V0. In the offline heat treatment facility, the distance L0 from the heating furnace 2 to the cooling facility 3 is short, so that even when the leading end portion of the steel plate is extracted from the heating furnace 2 and reaches the entrance of the cooling facility 3, the tail end portion of the steel plate is maintained at the temperature T0 in the heating furnace 2. Consequently, the tail end portion of the steel plate also is extracted at the temperature T0 as with the leading end portion and is cooled after the radiational cooling time L0/V0, so that the cooling start temperature can be kept constant over the entire length of the steel plate. Thus, in a thin steel plate for which the temperature tends to decrease due to radiational cooling, it is a feature of the offline heat treatment facility that it is advantageous to produce a materially homogeneous steel plate over the entire surface.

As in the foregoing, the present invention mainly targets a heat treatment facility for a thick steel plate, which is provided with a heating facility that heats a thick steel plate, a water-cooling device that cools the thick steel plate by jetting cooling water onto the thick steel plate heated by the heating facility, and a draining device that removes cooling water on the thick steel plate on the downstream side of the water-cooling device. However, the present invention can also be applied to an on-line heat treatment facility. In this case, the target is a heat treatment facility for a thick steel plate provided with a heating facility that heats a thick steel plate, a rolling facility that rolls the thick steel plate heated by the heating facility, a water-cooling device that cools the thick steel plate rolled to a predetermined plate thickness by the rolling facility, and a draining device that removes cooling water on the thick steel plate on the downstream side of the water-cooling device. Even in this case, it is the same as the offline heat treatment facility in that the thick steel plate is in a state of being heated to a high temperature at the entrance side of the water-cooling device. Meanwhile, in the on-line heat treatment facility, the radiational cooling time from immediately after rolling to the start of cooling is longer at the tail end portion than at the leading end portion of the steel plate, and assuming that the length of the steel plate is L and the transport speed of the steel plate is v, there is a difference in the radiational cooling time between the tail end portion and the leading end portion by the amount of time L/v. Consequently, even if the steel plate temperature after rolling is uniform, the tail end portion is cooled extra by the difference in the radiational cooling time, resulting in a difference in the cooling start temperature between the leading end portion and the tail end portion and making it not possible to obtain a steel plate having uniform properties over the entire surface. Thus, as will be described later, it is preferable that the in-plane temperature deviation of the steel plate be predicted by a temperature deviation prediction model, and the operating conditions of a draining device 32 be changed accordingly.

### [Cooling Facility]

The cooling facility 3 includes a water-cooling device 31 that water-cools the thick steel plate S under predetermined cooling conditions and the draining device 32. The water-cooling device 31 includes a plurality of upper cooling nozzles 31a and lower cooling nozzles 31b that are paired in the vertical direction with respect to the transport line of the thick steel plate S and arranged at a predetermined pitch along the transport direction of the thick steel plate S. From the cooling nozzles 31a and 31b, cooling water 7 is jetted toward the thick steel plate S. The thick steel plate S is cooled while being transported by the table rolls 6 arranged in a plurality of pairs at a predetermined pitch along the transport direction of the thick steel plate S with respect to the transport line. A cooling section with a pair of cooling nozzles 31a and 31b as a unit is referred to as a cooling zone, and a set of single or a plurality of cooling zones is referred to as an area. In FIG. 1, the cooling area (area to be water-cooled by the water-cooling device 31) is depicted as a total of seven cooling zones, but the effect of the present invention is not impaired even if it is other than seven cooling zones.

The operating parameters of the water-cooling device 31 include the amount of the cooling water 7 jetted from the pair of cooling nozzles 31a and 31b (amount of cooling water) and the transport speed of the thick steel plate S transported by the table rolls 6. As the amount of cooling water is greater, the cooling rate and the amount of temperature drop of the thick steel plate S can be made greater. Meanwhile, as the transport speed of the thick steel plate S is lower, the amount of temperature drop of the thick steel plate S can be made greater. By combining these operating parameters, the cooling stop temperature and the cooling rate can be controlled as cooling conditions to obtain the desired material quality.

In addition to these, as the operating parameters of the water-cooling device 31, the balance among the amount of cooling water for each cooling zone (for example, increasing the amount of cooling water in the upstream cooling zones and decreasing the amount of cooling water in the downstream cooling zones) may be changed. This is because the cooling rate can be controlled according to the temperature range of the thick steel plate S. Moreover, the number of cooling zones in which cooling water is jetted may be changed. The number of cooling zones used allows the cooling stop temperature to be controlled while the cooling rate is kept the same.

As for the amount of cooling water jetted from the pair of cooling nozzles 31a and 31b, the heat transfer coefficient is higher as the amount of cooling water is greater, so that when the cooling rate is controlled within a predetermined range in order to control the material quality of the steel plate, the amount of cooling water is adjusted. For the pair of cooling nozzles 31a and 31b, slit-type nozzles or flat spray nozzles capable of jetting a large flow of cooling water uniformly in the width direction can be used. A porous jet nozzle or a mist nozzle may also be used. It is preferable that the cooling nozzle be capable of variously changing the cooling water amount density according to the target cooling rate.

The draining device 32 includes a pair of upper and lower draining rolls 32a and 32b and a draining purge nozzle 32c that are arranged on the downstream side of the pair of cooling nozzles 31a and 31b located at the outermost side of the cooling area. In detail, as illustrated in FIG. 2, when the cooling water 7 flows out along the thick steel plate S to the exit side of the cooling facility 3, variation in the cooling stop temperature in the plane of the thick steel plate S increases due to water riding on the thick steel plate S, and the shape of the thick steel plate S may deteriorate due to the deviation of the cooling stop temperature on the upper and lower surfaces. Therefore, the draining rolls 32a and 32b are installed to prevent water from riding on the thick steel plate S.

The draining rolls 32a and 32b are provided with a mechanism capable of adjusting the gap between the rolls. At that time, by fixing the lower draining roll 32b, it can be the mechanism for which only the upper draining roll 32a can be raised and lowered. The lower draining roll 32b may be configured to also serve as a part of the table rolls 6. It is desirable that the draining rolls 32a and 32b be capable of measuring the pressing force using a load cell as a structure capable of applying a constant pressing force to the thick steel plate S. At this time, the draining rolls 32a and 32b are sometimes referred to as restraining rolls, focusing on their function of restraining the thick steel plate S, but they mean the same rolls.

In order to obtain a good draining property, the pressing force of the draining rolls 32a and 32b against the thick steel plate S is preferably 4 tons or more, more preferably 6 tons or more, and even more preferably 8 tons or more. However, when the pressing force is too large, the draining rolls 32a and 32b may deflect due to elastic deformation, creating a gap between the thick steel plate S and the draining rolls 32a and 32b, and the draining property may deteriorate. Thus, the pressing force is preferably 20 tons or less. With respect to the appropriate pressing force by the draining rolls 32a and 32b at this time, the appropriate range of conditions differs depending on the heat treatment conditions, such as the plate thickness, plate width, steel grade, and strength of the thick steel plate S to be heat-treated, the amount of cooling water in the water-cooling device 31, and the transport speed, cooling stop temperature, and cooling rate of the thick steel plate S. This is because the draining property by the draining rolls 32a and 32b depends on these operating conditions.

As for the mechanism for applying the pressing force by the draining rolls 32a and 32b, it may be any of a spring-type such as a spring and a mechanism capable of applying a constant pressing force such as pneumatic pressure or hydraulic pressure. For the purpose of adjusting the deflection of the draining rolls 32a and 32b, a mechanism capable of maintaining a constant pressing force is preferable, and a mechanism having a responsiveness by which the pressing force can be changed in the longitudinal direction of the thick steel plate S is suitable.

On the downstream side of the draining rolls 32a and 32b, the draining purge nozzle 32c is installed. The draining purge nozzle 32c jets draining purge 32d at an angle in the direction of the draining rolls 32a and 32b so that the cooling water 7 that has leaked from the gap formed at the contact portion between the draining rolls 32a and 32b and the thick steel plate S does not flow further on the downstream side. The draining purge 32d that is jetted on the upper surface of the thick steel plate S is jetted also at an angle in the plate width direction so that the cooling water 7 on the thick steel plate S is discharged toward the direction of the plate width end portion. The draining purge 32d may be a liquid or a gas, and a mixed fluid thereof may be jetted. However, when water is used as the draining purge 32d, the temperature deviation of the thick steel plate S may increase, so it is preferable to use gas. Moreover, it is more preferable to use air, from the viewpoint of manufacturing cost.

At this time, although the draining property is better as the jetting amount and jetting pressure of the draining purge 32d is greater, when the jetting pressure and jetting amount of the draining purge 32d are increased, it leads to an increase in the energy consumption at a pressure supply source for jetting. When air is used for the draining purge 32d, the air that is jetted toward the contact portion between the draining rolls 32a and 32b and the thick steel plate S may cause the cooling water 7 that has passed through the draining rolls 32a and 32b to scatter to the surrounding area, which may cause local temperature irregularities in the thick steel plate S. Meanwhile, when water is used for the draining purge 32d, temperature deviation may be caused on the surface of the thick steel plate S. Thus, there is a need to set the appropriate jetting pressure and jetting amount of the draining purge 32d according to the amount of the cooling water 7 leaking on the downstream side of the draining rolls 32a and 32b and the like.

The proper jetting pressure and jetting amount of the draining purge 32d are affected by the jetting method of the cooling water 7 in the cooling facility 3. For example, in a type such as a porous jet or a circular jet that jets the cooling water 7 at low pressure, because the amount of leaking water is small and the flow velocity of the leaking water is low, a jetting pressure of 0.05 to 0.30 MPa and a jetting amount per meter in width of 10 to 2000 m³/hr (10 to 2000 Nm³/hr for gas) are suitable. Meanwhile, in a type such as a spray flow or slit flow that jets the cooling water 7 at high pressure, because the amount of leaking water is large and the flow velocity of the leaking water is high, a jetting pressure of 0.10 to 0.50 MPa and a purge jetting amount per meter in width of 50 to 12000 m³/hr (50 to 12000 Nm³/hr for gas) are suitable.

In the present embodiment, the draining device 32 has been arranged on the downstream side of the water-cooling device 31, but the draining device 32 may be arranged on the upstream side of the water-cooling device 31. In this case, from the upstream side, the draining purge nozzle 32c, the draining rolls 32a and 32b, and the water-cooling device 31 are installed in this order. As a result, it is possible to prevent the cooling water 7 from flowing out from the thick steel plate S to the upstream side of the cooling facility 3. It is also possible to prevent the cooling start temperature of the thick steel plate S from decreasing and prevent the cooling water 7 from flowing into another device on the upstream side of the cooling facility 3.

### [Exit-Side Thermometer]

Return to FIG. 1. The exit-side thermometer 4 is installed at the exit side of the cooling facility 3 and measures the surface temperature of the thick steel plate S cooled by the cooling facility 3. The exit-side thermometer 4 is a device that measures the temperature distribution in the width direction of the thick steel plate S by a method of scanning the thermometer in the width direction of the thick steel plate S, a scanning thermometer that scans the temperature measurement point in the width direction of the thick steel plate S, a method in which a plurality of thermometers are arranged in the width direction of the thick steel plate S, and the like. It is more preferable to be a method of measuring the temperature distribution in the width direction at each position in the longitudinal direction of the thick steel plate S to be transported.

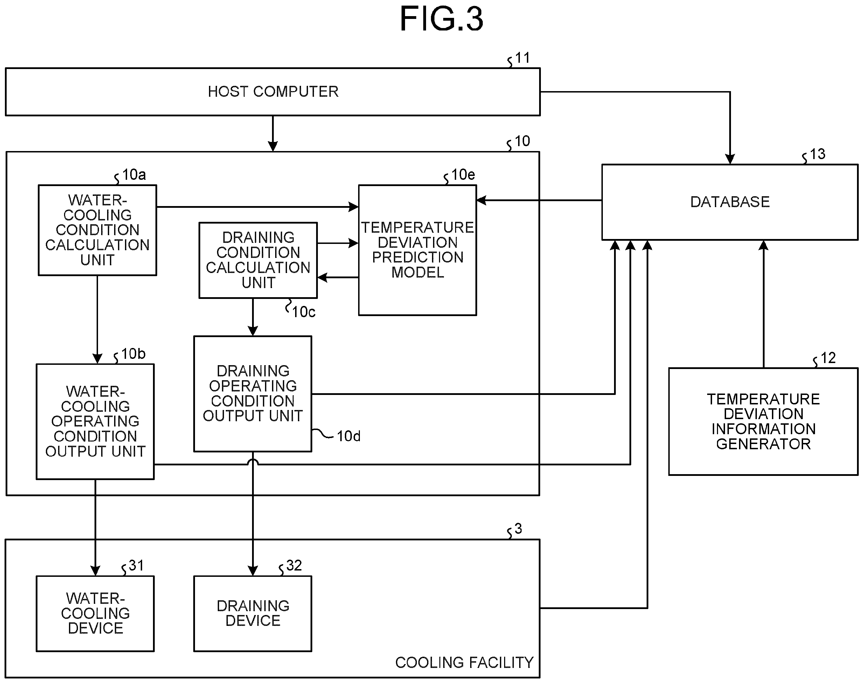

The data measured by the exit-side thermometer 4 is converted into temperature deviation information by a temperature deviation information generator 12 (see FIG. 3). The temperature deviation information can employ any format based on the temperature measurement data. For example, as the temperature deviation information, the difference between the maximum value and the minimum value, the standard deviation, or the like of the temperature distribution in the width direction at any of the leading end portion, the middle portion, and the tail end portion in the longitudinal direction of the thick steel plate S can be defined. Furthermore, in order to take into consideration the temperature deviation not only in the width direction but also in the longitudinal direction, the difference between the maximum value and the minimum value or the standard deviation of the in-plane temperature of the thick steel plate S, the value obtained by averaging in the longitudinal direction the difference between the maximum value and the minimum value of the temperature at each position in the longitudinal direction, or the like can be used. Moreover, by limiting these methods to a portion of the thick steel plate S, for example, to the temperature distribution in the width direction at a position 1.0 m from the leading end of the thick steel plate S, and defining the temperature deviation, it is conceivable to intensively manage only the relevant portion.

Furthermore, the above-described methods may be applied using the distribution of specific wavelength components obtained by filtering such as a high-pass filter, for example. In addition, the obtained temperature distribution and a heat transfer program may be used to perform simulation of the steel plate temperature to estimate the temperature distribution at locations other than the temperature measurement position, and the temperature deviation may be defined using the above-described method by using the relevant values. Further, the information from a two-dimensional image in which the in-plane temperature distribution of the thick steel plate S is color-coded into isotherms may also be used. Alternatively, the in-plane of the thick steel plate S is divided into regions, and by the magnitude of the temperature deviation in each region, the acceptance/rejection of the temperature deviation for each region is determined, and the information on a two-dimensional image in which the relevant result is binarized may be used.

As the temperature deviation information, by functionally approximating the temperature distribution in the width direction of the thick steel plate S, and by extracting the variation of higher-order wavelengths excluding the primary or the secondary wavelength component thereof, the relevant amplitude may be used as the temperature deviation information. In cooling by the water-cooling device 31, a certain degree of gentle temperature deviation arises between the center portion in the width direction of the thick steel plate S and the end portion in the width direction. Thus, the temperature variations of higher-order components for which the lower-order (gentle) temperature variations are excluded from the measurement result of the temperature distribution by the exit-side thermometer 4 can be distinguished as being due to the influence of water riding that occurs on the downstream side of the draining device 32, so that this can also be used as the temperature deviation information.

The temperature deviation information thus generated corresponds to the deviation in the material quality of the thick steel plate S cooled to room temperature after completing the heat treatment. This is because the temperature after the completion of the heat treatment affects the material quality of the thick steel plate S. The temperature deviation information is also useful information in determining the amount of the cooling water 7 leaking to the downstream side of the draining device 32. That is, when the amount of water of the cooling water 7 leaking to the downstream side of the draining device 32 is large, a transition boiling state or nucleate boiling state is likely to occur and a large temperature drop is likely to occur in the relevant portion. Meanwhile, when the amount of leaking cooling water is small, the water on the thick steel plate S evaporates immediately and is unlikely to cause nonuniformity in temperature. Thus, the temperature deviation information can be utilized to determine the quality of draining in the draining device 32.

### [Control Device]

The control device 10 is composed of a known information processing apparatus such as a personal computer and acquires from a host computer 11 the information on the target range of the cooling stop temperature (target cooling stop temperature) and the target range of the cooling rate (target cooling rate) that are needed to obtain the desired material quality, in addition to the heating temperature of the thick steel plate S, the size information such as plate thickness. Then, the control device 10 calculates the operating conditions of the heat treatment facility 1 to achieve such conditions and determines the operating parameters for each device in the cooling facility 3.

In the present embodiment, as illustrated in FIG. 3, the control device 10 functions, by executing a computer program, as a water-cooling condition calculation unit 10a. The water-cooling condition calculation unit 10a performs heat transfer calculations based on an internal model and determines the amount of cooling water in the cooling area and the transport speed of the thick steel plate S so as to satisfy the conditions of the target cooling stop temperature and the target cooling rate set as the cooling conditions. The command values of the amount of cooling water and the transport speed of the thick steel plate S thus determined are sent from a water-cooling operating condition output unit 10b to the water-cooling device 31. In the water-cooling device 31, based on the command values of the amount of cooling water and the transport speed of the thick steel plate S, commands for the operating pressure of cooling water pumps and the operating number thereof, the number of headers installed on the upstream side of the piping system of the cooling nozzles 31a and 31b and the opening degree of flow rate adjusting valves, and the rotation speed of the motor driving the table rolls 6 are generated, and the operating conditions of the water-cooling device 31 are determined.

Furthermore, the control device 10 functions, by executing the computer program, as a draining condition calculation unit 10c. The draining condition calculation unit 10c determines, as the conditions to prevent water riding at the downstream side of the cooling facility 3, the operating parameters of the draining device 32, such as the pressing conditions of the draining rolls 32a and 32b and the jetting conditions of the draining purge 32d. It is preferable that in the operating parameters of the draining device 32, the pressing roll position of the draining rolls 32a and 32b or the pressing force thereof be included. In addition, it is preferable that the jetting pressure or the jetting amount be included, as the jetting conditions of the draining purge 32d. The command values of the operating parameters of the draining device 32 thus determined are sent from a draining operating condition output unit 10d to the draining device 32. In the draining device 32, based on the command values of the pressing conditions of the draining rolls 32a and 32b, the jetting conditions of the draining purge 32d, or the like, the command values of the load control and pressing roll position control for pressing the draining rolls 32a and 32b and the command values of the pressure and flow rate of the draining purge 32d are generated, and the operating conditions of the draining device 32 are determined.

Furthermore, a database 13 is connected to the control device 10. The database 13 stores therein the temperature deviation information generated by the temperature deviation information generator 12. Furthermore, the database 13 stores therein information set by the host computer 11, such as the heating temperature, cooling device entrance temperature (cooling start temperature), plate thickness, plate width, steel grade, target cooling rate, target cooling stop temperature, and the like of the heat-treated thick steel plate S. The database 13 also stores therein the set values related to the operating parameters of the water-cooling device 31 that were output from the water-cooling operating condition output unit 10b (or the water-cooling condition calculation unit 10a) and the set values related to the operating parameters of the draining device 32 that were output from the draining operating condition output unit 10d (or the draining condition calculation unit 10c).

Moreover, the database 13 may acquire the actual values of the amount of cooling water in the water-cooling device 31 and the transport speed of the thick steel plate S by sensors and store therein the actual value of the amount of cooling water and the actual value of the transport speed. Similarly, the database 13 may store therein the actual values such as the pressing conditions and the pressing load of the draining rolls 32a and 32b in the draining device 32 and the jetting pressure and jetting flow rate of the draining purge 32d. The information stored in the database 13 is not limited to the foregoing and may include the actual values such as temperature results, detention time, and the like at each zone of a heating zone, a soaking zone, and the like of the heating furnace 2. This is because the surface roughness of the thick steel plate S, the state of oxide, and the like may also affect the wettability of the cooling water and may indirectly affect the draining property.

The control device 10 further includes a temperature deviation prediction model 10e. The temperature deviation prediction model 10e is a temperature deviation prediction model generated by machine learning using, as the learning data, at least 20 pieces of the temperature deviation information of the thick steel plates S after the draining process and the operation result data associated with the temperature deviation information. The number of pieces of learning data is preferably 500 or more, and more preferably 2000 or more. The input result data includes at least one or more pieces of operation result data selected from the operation result data on the water-cooling device 31 and at least one or more pieces of operation result data selected from the operation result data on the draining device 32. The output result data is the temperature deviation information on thick steel plates after the draining process stored in the database 13 as the temperature deviation information.

Although it is preferable to use the operation result parameters of the water-cooling device 31 and the draining device 32 as the input result data, the set values of the operating parameters determined by the water-cooling condition calculation unit 10a and the draining condition calculation unit 10c may also be used. In addition, as the input result data, various other information stored in the database 13 can be included. This is because the prediction accuracy of the temperature deviation information is enhanced by using the operation result data that can directly or indirectly influence the temperature deviation information.

At this time, as the operation result parameters of the water-cooling device 31, it is desirable that any of the cooling stop temperature of the thick steel plate S, the amount of cooling water, and the transport speed of the thick steel plate S in the cooling facility 3, or a plurality of operation result parameters be included. This is because when the cooling stop temperature is low, the condition tends to be such that the temperature deviation is likely to occur by the thick steel plate entering the cooling region in the nucleate boiling state. This is also because the temperature deviation is more likely to occur, as the heat transfer coefficient becomes greater as the amount of cooling water is larger. Moreover, this is because, as the transport speed of the thick steel plate S is slower, the cooling stop temperature becomes lower and the water flow density in the water-cooling device 31 is further increased, so that the temperature deviation is more likely to occur.

Meanwhile, as the operation result parameters in the draining device 32, it is desirable that at least one of the operation result parameters out of the pressing roll position or the pressing force of the draining rolls 32a and 32b, the jetting pressure or the jetting amount of the draining purge 32d be included. This is because the flow rate and flow path of the cooling water 7 leaking from between the draining rolls 32a and 32b and the thick steel plate S changes depending on the pressing roll position or the pressing force of the draining rolls 32a and 32b, which affects the temperature deviation. Furthermore, this is because, depending on the jetting pressure or the jetting amount of the draining purge 32d, the flow rate of the cooling water 7 leaking from between the draining rolls 32a and 32b and the thick steel plate S and the flow path of the cooling water 7 discharged from the upper surface of the thick steel plate S to the end portions of the width direction change, which affects the temperature deviation.

As the operation result parameters of the draining device 32, when the jetting position or the angle of the draining purge 32d is variable, they may be used, as the operation result data, for the input result data of the temperature deviation prediction model 10e. Moreover, when a large number of the draining purge nozzles 32c are arranged in the width direction of the thick steel plate S, the combination of the draining purge 32d to be used may be used as the input result data. This is because, for example, by setting the jetting of the draining purge nozzles 32c to every other nozzle or by using only the draining purge nozzles 32c located at the end portions in the width direction, the flow rate of the cooling water 7 leaking from between the draining rolls 32a and 32b and the thick steel plate S and the flow path of the cooling water 7 discharged from the upper surface of the thick steel plate S to the end portions of the width direction are changed, which affects the temperature deviation. In this case, a set of data for which a use/non-use state of each of the draining purge nozzles 32c is binarized is used as the input result data for the temperature deviation prediction model 10e.

Incidentally, the above-described input result data includes at least one or more pieces of the operation result data selected from each of the operation result data of the water-cooling device 31 and the operation result data of the draining device 32. The reason for including the operation result parameters of both the water-cooling device 31 and the draining device 32 is that, as the amount of the cooling water 7 jetted by the water-cooling device 31 is greater, the flow rate of the cooling water 7 leaking from between the draining rolls 32a and 32b and the thick steel plate S increases more, and thus a need to set the pressing force of the draining rolls 32a and 32b higher or to increase the jetting pressure of the draining purge 32d arises. Meanwhile, when the amount of the cooling water 7 jetted by the water-cooling device 31 is small, the flow rate of the cooling water 7 leaking from between the draining rolls 32a and 32b and the thick steel plate S decreases, so that it cannot be said that increasing the pressing force of the draining rolls 32a and 32b unnecessarily or increasing the jetting pressure of the draining purge 32d unnecessarily is efficient in that the energy consumption of the power sources is wasted.

The temperature deviation prediction model 10e may be updated to a new model by re-learning every month or every year, for example. This is because the temperature deviation prediction becomes more accurate, as the data stored in the database 13 is increased more. The machine learning model for generating the temperature deviation prediction model 10e may be any machine learning model, as long as it is capable of predicting the temperature deviation sufficient for practical use. For example, it only needs to use commonly used neural networks, decision tree learning, random forests, support vector regression, and the like. An ensemble model combining a plurality of models may also be used. Moreover, as the temperature deviation prediction model 10e, a machine learning model that determines whether the temperature deviation is within a predetermined allowable range of the temperature deviation, rather than the value of the temperature deviation of the thick steel plate S and uses the data for which the result of the determination is binarized as acceptance/rejection as the output result data may be used. In this case, a classification model such as the k-nearest neighbor method or logistic regression can be used.

### [Temperature deviation Control Process]

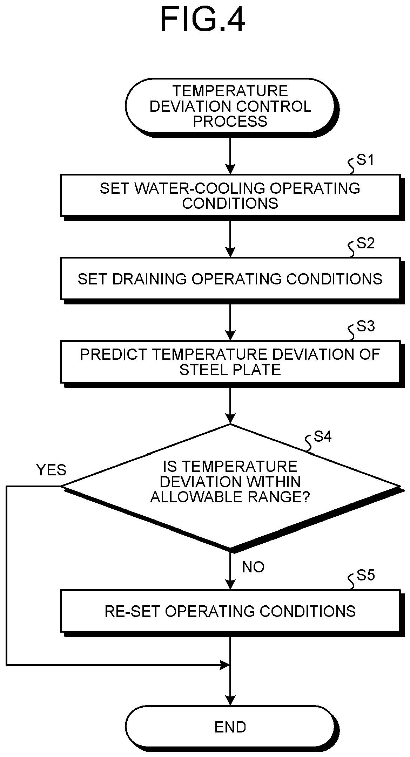

In the heat treatment facility 1 having such a configuration, the control device 10 controls, by executing a temperature deviation control process described below, the temperature deviation of the thick steel plate S at the exit side of the cooling facility 3 to be within a predetermined allowable range. With reference to FIG. 4, the operation of the control device 10 in executing the temperature deviation control process, which is one embodiment of the present invention, will be described hereinafter.

FIG. 4 is a flowchart illustrating the flow of the temperature deviation control process that is one embodiment of the present invention. The flowchart illustrated in FIG. 4 starts at the timing when the information on the specifications and manufacturing conditions of the thick steel plate S that is the processing target in the heat treatment facility 1 is input to the control device 10 from the host computer 11, and the temperature deviation control process proceeds to the processing at step S1.

In the processing at step S1, the water-cooling condition calculation unit 10a sets the water-cooling operating conditions, such as the amount of cooling water and the transport speed of the table rolls 6, so as to satisfy the target cooling stop temperature range and cooling rate range. This completes the processing at step S1, and the temperature deviation control process proceeds to the processing at step S2.

In the processing at step S2, the draining condition calculation unit 16 sets initial conditions for draining operating conditions, such as the pressing conditions of the draining rolls 32a and 32b and the jetting conditions of the draining purge 32d. The initial conditions for draining operating conditions can be set by table values classified by manufacturing conditions such as the plate thickness, plate width, and steel grade of the thick steel plate S of the processing target. In addition, the relation obtained from the experience of operations organized by an approximate expression may be used. This completes the processing at step S2, and the temperature deviation control process proceeds to the processing at step S3.

In the processing at step S3, the control device 10 calculates the temperature deviation prediction result of the thick steel plate S at the exit side of the water-cooling device 31 and the draining device 32 using the temperature deviation prediction model 10e, with the water-cooling operating conditions and the initial conditions for draining operating conditions set in the processing at step S1 and step S2, respectively, and the needed specifications, manufacturing conditions of the thick steel plate S, and the like as the input data. This completes the processing at step S3, and the temperature deviation control process proceeds to the processing at step S4.

In the processing at step S4, the control device 10 compares the temperature deviation prediction result calculated in the processing at step S3 with the temperature deviation allowable range defined according to the steel grade, size, and the like and determines whether the predicted temperature deviation is within the allowable range. As for the temperature deviation allowable range, from the viewpoint of making the mechanical properties of the thick steel plate S uniform in the plane of the thick steel plate S, suitable is 0 to 60°C when the temperature deviation is defined by the difference between the maximum value and the minimum value of the temperature and is 0 to 40°C when defined by the standard deviation. However, these allowable values may be adjusted according to the range of allowable mechanical properties needed for the product, and for example, when a property allowable range is narrow, making the temperature deviation allowable range narrow can produce the thick steel plate S having more uniform mechanical properties in the plane. In that case, it is preferable to be 0 to 30°C when the temperature deviation allowable range is defined by the difference between the maximum value and the minimum value of the temperature, and to be 0 to 15°C when the temperature deviation is defined by the standard deviation.

As a result of the determination, when the temperature deviation is within the allowable range (step S4: Yes), the control device 10 performs heat treatment on the thick steel plate S by controlling the heat treatment facility 1 according to the water-cooling operating conditions and the initial conditions for draining operating conditions set in the processing at step S1 and step S2 respectively, and a series of the temperature deviation control processes are completed. Meanwhile, when the temperature deviation is not within the allowable range (step S4: No), the control device 10 advances the temperature deviation control process to the processing at step S5.

In the processing at step S5, the control device 10 re-sets the water-cooling operating conditions and the initial conditions for draining operating conditions so that the temperature deviation falls within the allowable range. Then, the control device 10 performs heat treatment on the thick steel plate S by controlling the heat treatment facility 1 according to the operating conditions that have been re-set. As for the draining operating conditions to be changed, it is desirable to be at least one out of the pressing roll position or the pressing force of the draining rolls 32a and 32b, and the jetting pressure or the jetting amount of the draining purge 32d. This enables appropriate draining operating conditions to be achieved according to the attributes and manufacturing conditions of each thick steel plate S.

Furthermore, as a method of controlling temperature deviation, it does not necessarily need to maintain the operating conditions of the draining device 32 under constant conditions in the longitudinal direction of the thick steel plate S. Specifically, as the temperature deviation, when temperature deviations at several locations along the length direction of the thick steel plate S such as at the leading end portion, middle portion, and tail end portion of the thick steel plate S are predicted, the operating conditions of the draining device 32 may be changed according to the changes in the predicted temperature deviations in the longitudinal direction. When re-setting the operating conditions, work to check for facility problems such as damage to the draining rolls 32a and 32b, clogging of the draining purge nozzles 32c, and the like may also be performed. This completes the processing at step S5, and the series of temperature deviation control processes are completed.

### [Example]

In the present example, in the heat treatment facility 1 illustrated in FIG. 1, the thick steel plate S for which scale has been removed by shot blasting in advance in a room temperature state was heated to 920°C in the heating furnace 2 in a nitrogen atmosphere and was then rapidly cooled in the cooling facility 3 located 2.0 m away from the heating furnace 2, and afterward, the cooling was stopped to produce heat-treated steel. The cooling facility 3 is located on the exit side of the heating furnace 2, and inside the cooling facility 3, the cooling nozzles 31a and 31b that constitute the water-cooling device 31, and the draining rolls 32a and 32b that constitute the draining device 32 are installed. Flat spray nozzles were used as the cooling nozzles 31a and 31b, and air purge (arrangement illustrated in FIG. 2) was placed on the exit side of the draining rolls 32a and 32b to purge the small gap between the thick steel plate S and the rolls. In addition, a scanning radiation thermometer as the exit-side thermometer 4 was installed at 5.0 m on the exit side of the cooling facility 3, and the temperature of the thick steel plate S after cooling was measured.

First, the relation among the temperature deviation, manufacturing conditions, and draining conditions was confirmed in advance for the case in which the cooling of a thick steel plate S having a plate thickness of 25 mm was stopped at 140°C and for the case in which the cooling was stopped at 500°C. In the present example, the amount of cooling water in the final (outermost) cooling zone from the multiple cooling zones was used as the operating parameter of the water-cooling device 31, and the amount of purge jetting was used as the operating parameter of the draining device 32. When the thick steel plate S was cooled, the draining rolls 32a and 32b and the air purge located at the exit of the final cooling zone in the cooling area were operated. Furthermore, when the thick steel plate S was cooled, after the thick steel plate S was heated to 920°C in the heating furnace 2 under a nitrogen atmosphere, the amount of cooling water and the transport speed were controlled so that the cooling stop temperatures were 140°C and 500°C. The cooling nozzles used for the cooling were fixed in all seven cooling zones regardless of the cooling stop temperature. At that time, by changing the conditions for the amount of cooling water in the final cooling zone in a range of a maximum of 2000 L/min per meter in width, and by controlling the amount of cooling water and the transport speed in the cooling zone on the upstream side thereof, the adjustment was made so that the cooling stop temperature matched the target value.

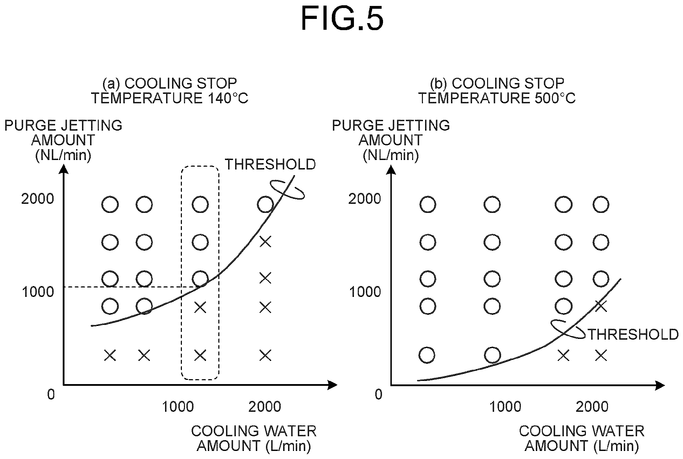

The temperature deviation at each longitudinal position of the thick steel plate S was measured by the exit-side thermometer 4 and the in-plane temperature distribution of the thick steel plate S was measured. Out of the surface temperatures measured on the entire surface of the thick steel plate S, the value obtained by subtracting the minimum value from the maximum value was evaluated as the temperature deviation in the thick steel plate, and the conditions in which the temperature deviation was 30°C or less were plotted on the graph as acceptance "0" and the conditions in which the temperature deviation was more than that were plotted as rejection "X". FIGS. 5(a) and 5(b) illustrate the acceptance/rejection of the temperature deviation obtained by the prior confirmation that is organized by the amount of cooling water and the amount of purge jetting at the exit side of the cooling zone. As illustrated in FIGS. 5(a) and 5(b), in both cases of the cooling stop temperature of 140°C and the cooling stop temperature of 500°C, it can be found that the amount of purge jetting needed to make the temperature deviation acceptable increases as the amount of cooling water increases.

It can be considered that this is because the leakage momentum increases as the amount of cooling water increases, and to cope with that, an extra purge momentum is needed. In addition, when compared with the case in which the cooling stop temperature is 140°C, it can be found that when the cooling stop temperature is 500°C, the amount of purge jetting needed is reduced even under the condition in which the amount of cooling water is the same. It can be considered that this is because when the cooling stop temperature was high, a steam film intervened between the cooling water and the steel plate and it became a film boiling state, making it easy to purge the leaking water, and even if the cooling water leaked, the temperature deviation did not increase because the cooling capacity is low in a film boiling state.

Next, on the case in which the cooling stop temperature is 140°C, the relation between the manufacturing conditions and the temperature deviation was checked for the conditions surrounded by the dotted line in FIG. 5(a). When the thick steel plate S was cooled, the draining rolls 32a and 32b and the air purge located at the exit of the final cooling zone in the cooling area were operated. Furthermore, after heating the thick steel plate S to 920°C in the heating furnace 2 under a nitrogen atmosphere, the amount of cooling water and transport speed were controlled so that the cooling stop temperature became 140°C. The cooling nozzles used for the cooling were fixed in all seven cooling zones regardless of the cooling stop temperature. The amount of cooling water and transport speed were the same for all conditions within the dotted line. As with the prior study, only the jetting amount of the draining purge 32d was used as the operating parameter of the draining device 32, and the experiment was conducted after preparing all the parameters, except for the amount of purge jetting and those that vary along with it.

Furthermore, a learning model using a neural network was created with the operating parameters of the heat treatment facility 1 including the operating parameters of the water-cooling device 31 and the operating parameters of the draining device 32 obtained from the prior study as input data and the temperature deviation information measured by the above-described method as output data. As the temperature deviation information, the value obtained by subtracting the minimum value from the maximum value out of the surface temperatures measured for the entire surface of the thick steel plate S was used. As a result, in order to reduce the temperature deviation after cooling to 30°C or less, it was calculated that the amount of purge jetting of 1000 NL/min or more per meter in width is needed. In the dotted line portion in FIG. 5(a), when the amount of purge jetting was below 1000 NL/min per meter in width, the temperature deviation resulted in rejection, and specifically, was 40 to 80°C. Meanwhile, when the amount of purge jetting was 1000 NL/min or more per meter in width, the temperature deviation resulted in acceptance, and specifically, was able to be reduced to the range of 13 to 24°C.

Although the embodiment to which the invention made by the present inventors was applied has been described in the foregoing, the present invention is not limited by the description and the drawings that form a part of the disclosure of the present invention by the present embodiment. That is, other embodiments, examples, operational techniques, and the like that are made by those skilled in the art and the like based on the present embodiment are all included in the scope of the present invention.

### Industrial Applicability

According to the present invention, a method of predicting temperature deviation in a thick steel plate capable of accurately predicting temperature deviation information on the thick steel plate after passing through a draining device can be provided. Furthermore, according to the present invention, a method of controlling temperature deviation in a thick steel plate capable of accurately controlling the temperature deviation of the thick steel plate after passing through a draining device within an allowable range can be provided. According to the present invention, a method of generating a temperature deviation prediction model for a thick steel plate capable of accurately predicting temperature deviation information on the thick steel plate after passing through a draining device can be provided. According to the present invention, a method of manufacturing a thick steel plate and a manufacturing facility of a thick steel plate capable of manufacturing the thick steel plate having desired properties with high yield can be provided.

### Reference Signs List

1 HEAT TREATMENT FACILITY
2 HEATING FURNACE
3 COOLING FACILITY
4 EXIT-SIDE THERMOMETER
5 COOLING ZONE
6 TABLE ROLL
7 COOLING WATER
10 CONTROL DEVICE
10a WATER-COOLING CONDITION CALCULATION UNIT
10b WATER-COOLING OPERATING CONDITION OUTPUT UNIT
10c DRAINING CONDITION CALCULATION UNIT
10d DRAINING OPERATING CONDITION OUTPUT UNIT
10e TEMPERATURE DEVIATION PREDICTION MODEL
11 HOST COMPUTER
12 TEMPERATURE DEVIATION INFORMATION GENERATOR
13 DATABASE
31 WATER-COOLING DEVICE
31a, 31b COOLING NOZZLE
32 DRAINING DEVICE
32a, 32b DRAINING ROLL
32c DRAINING PURGE NOZZLE
32d DRAINING PURGE
S THICK STEEL PLATE

## Claims

1. A method of predicting temperature deviation in a thick steel plate in a heat treatment facility for the thick steel plate, the heat treatment facility including a water-cooling device configured to jet cooling water onto the heated thick steel plate to cool the thick steel plate, and a draining device configured to remove the cooling water on the thick steel plate at a downstream side of the water-cooling device, the method comprising
a step of predicting temperature deviation information on the thick steel plate after passing through the draining device using a temperature deviation prediction model generated by machine learning with at least one operating parameter selected from each of operating parameters of the water-cooling device and operating parameters of the draining device as input data and with temperature deviation information on the thick steel plate after passing through the draining device as output data.

2. The method of predicting temperature deviation in a thick steel plate according to claim 1, wherein the operating parameters of the water-cooling device include at least one out of cooling stop temperature of the thick steel plate, an amount of cooling water, and a transport speed of the thick steel plate in the cooling device.

3. The method of predicting temperature deviation in a thick steel plate according to claim 1 or 2, wherein
the draining device includes
draining rolls configured to restrain the thick steel plate by a pair of upper and lower rolls, and
a draining purge nozzle configured to jet fluid toward a contact portion between the draining rolls and the thick steel plate, and
the operating parameters of the draining device include at least one out of a pressing roll position or pressing force of the draining rolls and a jetting pressure or jetting amount of the draining purge nozzle.

4. A method of controlling temperature deviation in a thick steel plate, the method comprising the steps of:
predicting the temperature deviation of a thick steel plate after passing through the draining device using the method of predicting temperature deviation in a thick steel plate according to any one of claims 1 to 3, and
resetting at least one operating parameter selected from the operating parameters of the draining device so that a predicted temperature deviation is within a preset allowable range.

5. The method of controlling temperature deviation in a thick steel plate according to claim 4, wherein the operating parameters of the draining device to be reset include at least one out of a pressing roll position or pressing force of draining rolls that restrain a thick steel plate by a pair of upper and lower rolls, and a jetting pressure or jetting amount of a draining purge nozzle that jets fluid toward the contact portion between the draining rolls and the thick steel plate.

6. A method of generating a temperature deviation prediction model for a thick steel plate in a heat treatment facility for a thick steel plate, the heat treatment facility including a water-cooling device configured to jet cooling water onto the heated thick steel plate to cool the thick steel plate, and a draining device configured to remove the cooling water on the thick steel plate at a downstream side of the water-cooling device, the method comprising
a step of generating a temperature deviation prediction model for the thick steel plate after passing through the draining device by machine learning using a plurality of pieces of learning data with information including at least one piece of operation result data selected from each of operation result data of the water-cooling device and operation result data of the draining device as input result data and with temperature deviation information on the thick steel plate corresponding to the input result data after passing through the draining device as output result data.

7. The method of generating a temperature deviation prediction model for a thick steel plate according to claim 6, wherein the machine learning includes machine learning selected from neural networks, decision tree learning, random forests, and support vector regression.

8. A method of manufacturing a thick steel plate comprising a step of manufacturing the thick steel plate using the method of controlling temperature deviation in a thick steel plate according to claim 4 or 5.

9. A manufacturing facility of a thick steel plate, comprising:
a water-cooling device configured to jet cooling water onto a heated thick steel plate to cool the thick steel plate;
a draining device configured to remove the cooling water on the thick steel plate at a downstream side of the water-cooling device; and
a temperature deviation prediction unit configured to output temperature deviation information on the thick steel plate after passing through the draining device, wherein the temperature deviation prediction unit is a machine learning model with at least one operating parameter selected from each of operating parameters of the water-cooling device and operating parameters of the draining device as input data and with temperature deviation information on the thick steel plate after passing through the draining device as output data.
